(19) Europäisches Patentamt
European Patent Office
Office européen des brevets

(11) **EP 0 994 136 B1**

(12) **EUROPÄISCHE PATENTSCHRIFT**

(45) Veröffentlichungstag und Bekanntmachung des Hinweises auf die Patenterteilung:
**07.03.2007 Patentblatt 2007/10**

(51) Int Cl.:
*C08G 18/08* (2006.01)   *C14C 11/00* (2006.01)
*C08G 18/70* (2006.01)   *C08G 18/12* (2006.01)
*C09D 175/06* (2006.01)

(21) Anmeldenummer: **99119098.4**

(22) Anmeldetag: **04.10.1999**

(54) **Wässrige Polyurethandispersionen**

Aqueous polyurethane dispersions

Dispersions aqueuses de polyuréthane

(84) Benannte Vertragsstaaten:
**AT BE CH CY DE DK ES FI FR GB GR IE IT LI LU MC NL PT SE**

(30) Priorität: **16.10.1998 DE 19847791**

(43) Veröffentlichungstag der Anmeldung:
**19.04.2000 Patentblatt 2000/16**

(73) Patentinhaber: **LANXESS Deutschland GmbH 51369 Leverkusen (DE)**

(72) Erfinder:
• **Hassel, Tillmann, Dr. 50259 Pulheim (DE)**
• **Meixner, Jürgen, Dr. 47083 Krefeld (DE)**
• **Muenzmay, Thomas, Dr. 41539 Dormagen (DE)**
• **Reiners, Jürgen, Dr. 51373 Leverkusen (DE)**
• **Schoob, Jörg 51375 Leverkusen (DE)**

(56) Entgegenhaltungen:
**EP-A- 0 546 375      EP-A- 0 807 650
WO-A-92/16576      US-A- 5 770 651**

Bemerkungen:
Die Akte enthält technische Angaben, die nach dem Eingang der Anmeldung eingereicht wurden und die nicht in dieser Patentschrift enthalten sind.

**Beschreibung**

Die Erfindung betrifft wäßrige Polyurethandispersionen, Verfahren zu ihrer Herstellung, diese enthaltende wässrige Polyurethansysteme sowie ihre Verwendung zur Beschichtung von Leder.

Es sind bereits Bindemittel auf Polyurethanbasis für die wäßrige Zurichtung von Ledern bekannt.

Die Zurichtung von Leder verleiht den Lederartikeln ihren modischen Aspekt und ihre Gebrauchstüchtigkeit. Unter Zurichtung wird das Auftragen von Bindemitteln, Farbstoffen, Pigmenten, Wachsen, Griffmitteln und weiteren Hilfsmitteln, nach üblichen Auftragstechniken wie Spritzen, Drucken, Gießen, Rakeln, Plüschen auf die gegerbte Haut verstanden. Dieses Auftragen kann in einer Schicht erfolgen, wird aber in der Regel in mehreren Schichten durchgeführt, wobei weitere Prozeßschritte wie Zwischentrocknen, Bügeln, Prägen, Millen, üblich sind. Nach jeder Applikation einer Zurichtschicht werden die Leder normalerweise gestapelt. Dies ist nur möglich, wenn die frisch applizierte Zurichtschicht nach dem Trocknen nicht klebt. Die technischen Möglichkeiten zur Trocknung eines wäßrigen Zurichtauftrags auf Leder sind limitiert; es können nur 90°C bis - kurzzeitig - 100°C erreicht werden, weil sonst die Schrumpftemperatur des Leders überschritten wird. Auch die Trockenzeit ist kurz.

In EP-A-807650 werden wässrige Polyurethan-Bindemittelsysteme auf Basis spezieller Ausgangsmaterialien, insbesondere für Glas beschrieben.

Wegen dieser Limitierungen werden in der wäßrigen Zurichtung von Leder inherent filmbildende Polymerdispersionen eingesetzt, die nach dem Auftrocknen eine klebfreie, mechanisch belastbare Zurichtschicht liefern.

Derartige Bindemittel haben jedoch wesentliche Nachteile, beispielsweise ist der Verlauf nicht optimal und die Bildung eines geschlossenen Films ist erschwert. In der technischen Zurichtung wird versucht, diese Nachteile durch Zugabe von Verlaufshilfsmitteln - sogenannte Leveller - zu kompensieren. Ein guter Verlauf und optimale Filmbildung der Bindemittel eines Zurichtsystems ist essentiell zur Erlangung des geforderten Aspektes und Echtheitsniveaus der Zurichtung. Das gilt besonders für die oberste Zurichtschicht, den sogenannten Topcoat.

Derartige Bindemittel sind Polymerdispersionen. Niedermolekulare - nicht filmbildende - Polyurethandispersionen wurden bisher in der wäßrigen Zurichtung von Leder nicht eingesetzt, weil derartige Produkte nach dem Auftrocknen klebrig sind, was für den technischen Einsatz prohibitiv ist.

Aufgabe der vorliegenden Erfindung war es, diese Nachteile zu beheben. Überraschenderweise wurde nun eine wäßrige Polyurethandispersion gefunden, die ein Polyurethan enthält, das aufgebaut ist aus:

a) wenigstens einem Polyol, vorzugsweise einem Diol, mit einem als Zahlenmittel bestimmten mittleren Molekulargewicht von 500 bis 6 000 g/mol, vorzugsweise 1 000 bis 4 000, insbesondere 1 500 bis 3 000 g/mol,

b) wenigstens einem Polyol, vorzugsweise Diol, mit einem Molgewicht von kleiner 500 g/mol, vorzugsweise von 61 bis 499 g/mol,

c) wenigstens einem aliphatischen Polyisocyanat, vorzugsweise Diisocyanat, vorzugsweise mit einem Molgewicht kleiner 500 g/mol, vorzugssweise 112 bis 400, insbesondere 168 bis 262 g/mol,

d) wenigstens einem Diol mit einem Molekulargewicht von kleiner als 450 g/mol, das eine oder mehrere ionische Gruppen und/oder eine oder mehrere potentiell ionische Gruppen trägt, vorzugsweise wenigstens eine Carbonsäure-oder Carboxylatgruppe trägt,

e) wenigstens einem gegenüber NCO-Gruppen reaktiven Amin, das Hydroxygruppen trägt und eine OH-Funktionalität von 1 bis 6 besitzt,

f) Wasser und gegebenenfalls

g) einem Monoalkohol,

dadurch gekennzeichnet, daß das Molverhältnis von Polyol der Komponente a) zur Summe der Polyole b) und d) 1:1,5 bis 1:4, vorzugsweise 1:2 bis 1:3 beträgt, das Molverhältnis der Summe der Polyole a), b) und d) zum Polyisocyanat c) 1:1,1 bis 1:2,5, vorzugsweise 1:1,2 bis 1:1,7 beträgt, wobei die OH-Funktionalität des Polyurethans 2 bis 6, vorzugsweise 2 bis 4 beträgt, und das als Zahlenmittel bestimmte mittlere Molekulargewicht des Polyurethans weniger als 15 000, vorzugsweise von 2 500 bis 10 000, insbesondere von 3 000 bis 7 000 g/mol beträgt.

Im allgemeinem besitzen die Polyole a) und b) keine ionischen Gruppen bzw. potentielle ionische Gruppen, wenn man einmal von endständigen Carbonsäuregruppen in Polyesterpolyolen absieht, die anteilig bei deren Herstellung nicht immer zu vermeiden sind.

Als geeignetes Polyol der Komponente a) oder als geeignete Polyole der Komponente a) können eingesetzt werden: Polyester, Polyether, Polycarbonate und Polyesteramide des Molekulargewichtsbereichs 500 bis 6 000.

Als solche sind z.B. zu nennen: Umsetzungsprodukte von mehrwertigen, vorzugsweise zweiwertigen Alkoholen mit vorzugsweise zweiwertigen Carbonsäuren. Anstelle der Polycarbonsäuren können auch die entsprechenden Polycarbonsäureanhydride oder entsprechende Polycarbonsäureester von niedrigen Alkoholen oder deren Gemische zur Herstellung der Polyester verwendet werden. Die Polycarbonsäuren können aliphatischer, cycloaliphatischer, aromatischer und/oder heterocyclischer Natur sein und gegebenenfalls, z.B. durch Halogenatome, substituiert und/oder ungesättigt sein. Als Beispiel hierfür seien genannt: Bernsteinsäure, Adipinsäure, Korksäure, Azelainsäure, Sebacinsäure, Phthalsäure, Isophthalsäure, Phthalsäureanhydrid, Tetrahydrophthalsäureanhydrid, Hexahydrophthalsäureanhydrid, Tetrachlorphthalsäureanhydrid, Endomethylentetrahydrophthalsäureanhydrid, Glutarsäureanhydrid, Maleinsäure, Maleinsäureanhydrid, Fumarsäure, dimere Fettsäuren wie Ölsäuren, gegebenenfalls in Mischung mit monomeren Fettsäuren, Terephthalsäuredimethylester, Terephthalsäure-bis-glykolester.

Als mehrwertige Alkohole kommen z.B. Ethylenglykol, Propylenglykol-(1,2) und - (1,3), Butylenglykol-(1,4), -(1,3) und -(2,3), Hexandiol-(1,6), Octandiol-(1,8), Neopentylglykol, Cyclohexandimethanol (1,4-Bis-hydroxymethylcyclohexan), 2-Methyl-1,3-propandiol, ferner Diethylenglykol, Triethylenglykol, Tetraethylenglykol, Polyethylenglykol, Dipropylenglykol, Polypropylenglykol, Dibutylenglykol und Polybutylenglykol in Frage. Die Polyester können anteilig endständige Carboxylgruppen aufweisen. Auch Polyester aus Lactonen sind einsetzbar.

Bei den besonders bevorzugten Polyesterpolyolen, insbesondere Polyesterdiolen handelt es sich um Dicarbonsäurepolyesterpolyole, deren Dicarbonsäure-Komponente zu mindestens 50 Carboxyläquivalent-%, besonders bevorzugt ausschließlich aus Adipinsäure und deren Polyol-Komponente vorzugsweise zu mindestens 50 Hydroxyäquivalent-%, aus 1,4-Dihydroxybutan, 1,6-Dihydroxy-hexan oder Neopentylglykol bestehen.

Auch Hydroxylgruppen aufweisende Polycarbonate kommen als Komponente a) oder als Bestandteil der Komponente a) in Betracht, z.B. solche, die durch Umsetzung von Diolen wie Propandiol-(1,3), Butandiol-(1,4) und/oder Hexandiol-(1,6), Diethylenglykol, Triethylenglykol, Tetraethylenglykol mit Dicarbonaten, z.B. Diphenylcarbonat oder Phosgen, hergestellt werden können. Beliebige Gemische der beispielhaft genannten Polyhydroxylverbindungen können ebenfalls als Komponente a) verwendet werden.

Besonders bevorzugt sind zu nennen:
Dihydroxypolyester aus Dicarbonsäuren bzw. deren Anhydriden, z.B. Adipinsäure, Bernsteinsäure, Phthalsäureanhydrid, Isophthalsäure, Terephthalsäure, Korksäure, Azelainsäure, Sebaceinsäure, Tetrahydrophthalsäure, Maleinsäureanhydrid, Dimerfettsäuren und Diolen, z.B. Ethylenglykol, Propylenglykol, 1,4-Propandiol, Diethylenglykol, Triethylenglykol, Butandiol-1,4, Hexandiol-1,6, Trimethylenpentandiol, Cyclohexandiol-1,4, Cyclohexandimethanol-1,4, Neopentylglykol, Octandiol-1,8; Polyester und Polycarbonate auf Lacton-, insbesondere $\varepsilon$-Caprolactonbasis, Polycarbonate, wie sie durch Umsetzung beispielsweise der oben genannten Diole mit Diaryl- oder Dialkylcarbonaten oder Phosgen zugänglich sind. Geeignet sind ebenfalls Polyether, wie sie z.B. unter Verwendung von Diolen oder Wasser als Startermolekül durch Polymerisation von Ethylenoxid und/oder Propylenoxid sowie durch Polymerisation von Tetrahydrofuran erhalten werden können.

Besonders geeignete Polyole der Komponente a) sind Polycarbonatdiole, Polylactoncarbonatdiole und Polytetrahydrofurandiole.

Von diesen besonders geeigneten Polyolen sind Hexandiol-polycarbonatdiole, Caprolacton-Hexandiol-polycarbonatdiole und Tetrahydrofurandiole bevorzugt, insbesondere solche des Molmassenbereiches 1000 bis 3000 g/mol.

Als bevorzugte Polyole, insbesondere Diole der Komponente b) kommen in Frage: Ethylenglykol, 1,4-Butandiol, 1,6-Hexandiol, Neopentylglykol, Trimethylpentandiol, Propylenglykol, 1,3-Propandiol, 1,4-Cyclohexandimethanol und Mischungen davon. Vorzugsweise wird 1,4-Butandiol verwendet.

Geeignete aliphatische Isocyanate der Komponente c) sind beispielsweise Isocyanate wie z.B. Hexamethylendiisocyanat, Butandiisocyanat, Isophorondiisocyanat, 1-Methyl-2,4(2,6)-diisocyanatocyclohexan, Norbornandiisocyanat, Tetramethylxylylendiisocyanat, Hexahydroxylylendiisocyanat, 4,4'-Diisocyanatodicyclohexylmethan.

Vorzugsweise werden 4,4'-Diisocyanatodicyclohexylmethan und/oder Isophorondiisocyanat und/oder Hexamethylendiisocyanat und/oder 1-Methyl-2,4(2,6)-diisocyanatocyclohexan eingesetzt.

Als ionische bzw. potentiell ionische Gruppen-tragendes Diol der Komponente d) kommen insbesondere Carbonsäure- bzw. Carboxylatgruppen-tragende Diole in Frage: 2,2-Bis(hydroxymethyl)alkancarbonsäuren wie Dimethylolessigsäure, 2,2-Dimethylolpropionsäure, 2,2-Dimethylolbuttersäure, 2,2-Dimethylolpentansäure, Dihydroxybernsteinsäure.

Bevorzugt wird Dimethylolpropionsäure verwendet.

Die Amine der Komponente e) dienen zur Einführung der endständigen Hydroxylgruppen, wobei die Isocyanate in dem weiter unten erläuterten Herstellungverfahren für die erfindungsgemäßen Polyurethandispersionen, vorzugsweise ausschließlich mit der Aminogruppe reagieren. Geeignete Verbindungen der Komponente e) sind beispielsweise Ethanolamin, Propanolamin, N-Methylethanolamin, Diethanolamin, N,N,N'-tris-2-hydroxyethyl-ethylendiamin.

Bevorzugt verwendet werden Ethanolamin und Diethanolamin.

Die Aufbaukomponente f) dient dem weiteren Molmassenaufbau der Dispersionen, vorzugsweise nach der Dispergierung. Dabei entstehen durch Reaktion mit den NCO-Gruppen $NH_2$-Gruppen, die mit weiteren NCO-Gruppen unter Molmassenaufbau durch Harnstoffverknüpfung abreagieren.

Im Rahmen dieser Anmeldung werden unter Polyurethanen daher auch Polyurethanharnstoffe verstanden.

Als gegebenenfalls vorhandene Komponente g) können beispielsweise monofunktionelle Alkohole der aliphatischen und araliphatischen Reihe oder entsprechende Polyetheralkohole verwendet werden. Der Einsatz von aliphatischen Alkoholen ist bevorzugt, insbesondere $C_1$-$C_{10}$-Alkoholen.

Beispielsweise einsetzbar sind: Methanol, Butanol, Hexanol, 2-Ethylhexanol, 2-Methoxyethanol, Diethylenglykolmonomethylether und Benzylalkohol.

In einer bevorzugten Ausführungsform wird das Molverhältnis der als Kettenabbrecher fungierenden Komponenten e) und g) so gewählt, daß sich die gewünschte OH-Funktionalität des Polyurethans einstellt.

Besonders bevorzugt erfolgt dies nach der Beziehung

$$F\ (OH\text{-}PU)\ =\ \frac{Mol\ e)}{Mol\ e)\ +\ Mol\ g)}\ \cdot\ 2\ \cdot\ F\ \ (OH\ von\ e))$$

worin

F (OH-PU) die resultierende OH-Funktionalität des Polyurethans ist,

Mol e) die molare Einsatzmenge an Aminoalkohol der Komponente e) bedeutet,

Mol g) die molare Einsatzmenge an monofunktionellem Alkohol der Komponente g) bedeutet und

F (OH von e)) die OH-Funktionalität des Aminoalkohols der Komponente e) angibt.

Ebenfalls bevorzugt ist es, die molare Absolutmenge an den Komponenten e) und g) so einzustellen, daß das resultierende mittlere Zahlenmittel der Molmasse des Polyurethans kleiner 15 000 g/mol, bevorzugt 2 500 bis 10 000, insbesondere 3 000 bis 7 000 g/mol ist.

In einer besonderen Ausführungsform beträgt die mittlere Teilchengröße des Polyurethans weniger als 100 nm, vorzugsweise 20 bis 80, insbesondere 30 bis 60 nm.

Die Teilchengröße wird vorzugsweise mittels der Laserkorrelationsspektroskopie bestimmt.

Ebenfalls bevorzugt ist es, wenn der Gehalt der ionischen Gruppen, insbesondere der Carboxylatgruppen, des Polyurethans 5 bis 200, vorzugsweise 10 bis 100, insbesondere 20 bis 60 Millival, bezogen auf 100 g des Polyurethans, beträgt.

Weitere bevorzugte erfindungsgemäße Polyurethandispersionen enthalten vorzugsweise gegebenenfalls organisch belegte Kieselsäuren, vorzugsweise mit einer mittleren Korngröße von 1 bis 10 $\mu$m, insbesondere von 2 bis 7 $\mu$m, vorzugsweise mit einer Ölzahl von 150 bis 400 nach ISO 787/5.

Die Teilchengröße wird im allgemeinen mit der Transmissionselektronenmikroskopie ermittelt.

Bevorzugt beträgt das Festkörperverhältnis von Polyurethan der Dispersion zu Kieselsäure 2:1 bis 5:1. Ebenfalls bevorzugt beträgt der Glührückstand einer solchen Dispersion 1 bis 8 %.

Bevorzugt ist es auch, daß die erfindungsgemäßen Polyurethandispersionen weitere Zusätze enthalten. Als solche kommen beispielsweise weitere Bindemittel beispielsweise Latices auf Polyurethanbasis oder Acrylatbasis in Frage.

Andere weitere Zusätze können Viskositätsregler, weitere organische Basen zur pH-Einstellung, Entschäumer und Mikrobizide zur Stabilisierung sein. Derartige Zusätze werden im allgemeinen in untergeordneter Menge eingesetzt; die Mengen betragen vorzugsweise 100 ppm bis 5 %, bezogen auf die Dispersion.

Die Erfindung betrifft weiterhin ein Verfahren zur Herstellung der erfindungsgemäßen Polyurethandispersion, das dadurch gekennzeichnet ist, daß man die Komponenten a), b), c), d) und gegebenenfalls g) zu einem NCO-Prepolymer umsetzt und dieses mit den Komponenten e) und Wasser zu einem Polyurethan mit einer OH-Funktionalität von 2 bis 6 umsetzt.

Bevorzugt beträgt die molare Summe der Komponenten e) und g), bezogen auf 1 000 g Prepolymer wenigstens 0,134 mol; bevorzugt 0,2 bis 0,8 mol, besonders bevorzugt 0,286 bis 0,66 mol.

In einer bevorzugten Ausführungsform ist das Verfahren dadurch gekennzeichnet, daß man entweder aus den Komponenten a), d) und gegebenenfalls g) mit dem Polyisocyanat c) ein NCO-Prepolymer aufbaut und anschließend das NCO-Prepolymer mit der Komponente b) umsetzt und dann die gegebenenfalls vorhandenen potentiellen ionischen Gruppen, insbesondere Carbonsäuregruppen mit einer gegenüber NCO-Gruppen nicht reaktiven Base neutralisiert und das neutralisierte Prepolymer mit Wasser und der Komponente e) umsetzt,

oder

durch Umsetzung eines Gemisches enthaltend die Komponenten a), b), d), g) und c) ein NCO-Prepolymer herstellt, dann die gegebenenfalls vorhandenen potentiell ionische Gruppen, insbesondere Carbonsäuregruppen durch Zusatz einer gegenüber NCO-Gruppen nicht reaktiven Base neutralisiert und das neutralisiserte Prepolymer mit Wasser und der Komponente e) umsetzt.

Bevorzugt wird das erfindungsgemäße Verfahren nach der Schmelz-Dispergiermethode durchgeführt. Die Schmelz-Dispergiermethode ist dadurch gekenzeichnet, daß man ein NCO-Prepolymer - entweder als Schmelze oder als Lösung in einem nicht NCO-reaktivem, wassermischbarem Lösemittel - enthaltend eine zur Bildung einer stabilen Dispersion ausreichenden Menge an eingebauten ionischen Gruppen - oder durch vorherige Neutralisation in ionische Gruppen überführte potentiell ionische Gruppen entweder in Wasser einrührt oder Wasser in das Prepolymer einrührt.

Hierbei bildet sich im allgemeinen eine stabile Emulsion des Prepolymers. Die NCO-Gruppen können dann entweder durch Reaktion mit Wasser abreagieren; es ist aber auch möglich, sie mit wassermischbaren (Poly)aminen umzusetzen.

Besonders geeignet für dieses Verfahren sind Prepolymere mit aliphatischen NCO-Gruppen.

Vorzugsweise werden bei der Prepolymerherstellung im erfindungsgemäßen Verfahren organische Lösungsmittel eingesetzt, die nicht NCO-reaktiv und mit Wasser mischbar sind.

Als geeignete Lösungsmittel können beispielsweise genannt werden:

Ketone, wie Aceton und Butanon; Ether, wie Tetrahydrofuran, Dioxan und Dimethoxyethan, Etherester wie Methoxypropylacetat; (cyclische) Amide und Harnstoffe wie Dimethylformamid, Dimethylacetamid, N,N'-Dimethyl-2,5-Diazapentanon und besonders N-Methylpyrrolidon.

Diese Lösemittel können in jeder Stufe der Prepolymerherstellung zugesetzt werden.

Besonders günstig ist allerdings eine Fahrweise, in der das Lösungsmittel von Beginn an zugegen ist.

Die Prepolymerherstellung erfolgt vorzugsweise bei Temperaturen von 50 bis 120°C, besonders bevorzugt 60 bis 110°C. Die Neutralisation wird vorzugsweise bei 60 bis 90°C vorgenommen.

Die Komponente e) wird vorzugsweise in Gegenwart eines 10- bis 60-fachen Gewichtsüberschusses an Wasser eingesetzt. Dies wird vorzugsweise sichergestellt dadurch, daß man die Komponente e) zusammen mit dem Überschuß an Wasser, in das NCO-Prepolymer einsetzt, vorzugsweise einrührt oder dadurch, daß man das NCO-Prepolymer zunächst in Wasser dispergiert, vorzugsweise bei einer Temperatur von 40 bis 60°C und nach der Dispergierung die Komponente e), gegebenenfalls als wäßrige Lösung zugibt.

Diese Verfahrensvariante wird vorzugsweise so durchgeführt, daß man zunächst Wasser vorlegt und das NCO-Prepolymer einsetzt. Nach der Zugabe der Komponente e) wird vorzugsweise so lange gerührt, bis das Reaktionsprodukt NCO-frei ist.

Die Komponente g) wird vorzugsweise mit dem NCO-Prepolymer umgesetzt, noch bevor das NCO-Prepolymer in Wasser dispergiert wird.

Auch gegebenenfalls vorhandene potentielle ionische Gruppen, insbesondere die Carbonsäuregruppen des NCO-Prepolymeren werden vorzugsweise neutralisiert, bevor das NCO-Prepolymer in Wasser dispergiert wird.

Als gegenüber NCO-Gruppen nicht reaktive Basen kommen vorzugsweise tertiäre Amine in Frage, insbesondere sind das tertiäre Amine wie Trimethylamin, Triethylamin, N-Methylmorpholin, N-Methylpiperidin oder N,N-Dimethyl-N-[2-ethoxy]-ethylamin.

Die Erfindung betrifft weiterhin ein wäßriges Polyurethansystem enthaltend:

A) wenigstens eine erfindungsgemäße wäßrige Polyurethandispersion und

B) wenigstens ein wasserdispergierbares, aliphatisches oder cycloaliphatisches Polyisocyanat mit einer NCO-Funktionalität von wenigstens 2, vorzugsweise 2 bis 6, insbesondere 2,3 bis 4,

wobei das Verhältnis der OH-Gruppen der Komponente A) zu den NCO-Gruppen der Komponente B) 1:1 bis 1:4, vorzugsweise 1:1,2 bis 1:3 beträgt.

Unter wasserdispergierbaren Isocyanaten werden vorzugsweise solche verstanden, die sich mit nur mäßigen Scherkräften - im Extremfall durch einfaches Rühren in einer wäßrigen Phase verteilen lassen und dabei eine zumindest über einige Stunden stabile feinteilige Emulsion liefern.

Derartige Polyisocyanate sind bekannt; beispielsweise durch Modifizierung mit hydrophilen Polyethern und/oder durch ionische Modifizierung enthalten sie ein internes Emulgatorsystem, was die Emulgierung ermöglicht.

Bevorzugte Polyisocyanate der Komponente B) sind polyether- oder ionisch modifizierte Biurete, Allophanate, Trimerisate des Hexamethylendiisocyanats (HDI) oder des Isophorondiisocyanats (IPDI). Besonders bevorzugt sind nichtionische Polyisocyanate, die mit Hilfe von Polyethern modifiziert sind. Als solche sind beispielsweise aliphatische oder cycloaliphatische Polyisocyanate mit im statistischen Mittel weniger als 10 Ethylenoxideinheiten aufweisende Polyethylenoxidpolyetheralkoholen erhältliche Polyisocyanatgemische geeignet. Solche sind beispielsweise aus EP-A 540 985 bekannt.

Neben diesen rein nichtionisch hydrophilierten, Polyetherurethane enthaltenden Polyisocyanaten sind auch Polyether-modifizierte wasserdispergierbare Polyisocyanate bekannt, die zur Verbesserung der Emulgierbarkeit oder zur Erzielung spezieller Effekte zusätzlich noch ionische Gruppen, beispielsweise Sulfonatgruppen (vgl. z.B. EP-A 703 255) oder Amino- bzw. Ammoniumgruppen (vgl. z.B. EP-A 582 166) aufweisen.

Als geeignete Polyisocyanate der Komponente B) seien beispielsweise folgende genannt:

- Umsetzungsprodukt aus 80 Teilen HDI-Trimerisat mit 20 Teilen eines Ethanol-gestarteten EO-Polyethers mit einem mittleren Molekulargewicht von 350 g/mol;

- Umsetzungsprodukt aus 90 Teilen HDI-Trimerisat mit 10 Teilen eines Methanol-gestarteten EO-Polyethers eines mittleren Molekulargewichts von 70 g/mol;

- Umsetzungsprodukt aus 85 Teilen HDI-Trimerisat mit 15 Teilen eines Butanol-gestarteten EO/PO-Blockcopolyethers mit EO/PO-Verhältnis 7:3 und einer mittleren Molmasse von 2250 g/mol;

- Umsetzungsprodukt aus 83 Teilen HDI-Biuret und 17 Teilen eines Methanol-gestarteten EO-Polyethers der mittleren Molmasse 650 g/mol;

- Umsetzungsprodukt von 87 Teilen IPDI-Trimerisat mit 13 Teilen einer 2:1-Mischung von Methanol-gestarteten EO-Polyethern der mittleren Molmasse von 350 und 750 g/mol;

- Umsetzungsprodukt von 80 Teilen HDI-Trimerisat mit 3 Teilen Triethylenglykol und 17 Teilen eines Ethanol-gestarteten EO-Polyethers der mittleren Molmasse 550 g/mol;

- Umsetzungsprodukt von 87 Teilen HDI-Trimerisat mit 0,2 Teilen N,N-Dimethylethanolamin und 16,9 Teilen eines Methanol-gestarteten EO-Polyethers der mittleren Molmasse 350 g/mol, wobei nach der Umsetzung die tertiäre Aminogruppe mit Dibutylphosphorsäure protoniert wird;

- Umsetzungsprodukt von 85 Teilen HDI-Trimerisat mit 5 Teilen des ethoxilierten Natriumsalzes der 1,4-Butandiol-2-sulfonsäure [mittlere Molmasse 368 g/mol] und 10 Teilen eines Ethanol-gestarteten EO-Polyethers der mittleren Molmasse 370 g/mol.

Die erfindungsgemäßen Polyurethansysteme können weitere Hilfs- und Zusatzstoffe wie beispielsweise anorganische und organische Pigmente, Farbstoffe, Verlaufsmittel, Viskositätsregler ionischer sowie nicht-ionischer Natur, natürliche und synthetische Wachse, Entschäumer sowie silikonische und nicht silikonische Griffmittel enthalten.

Die erfindungsgemäßen wäßrigen Polyurethandispersionen liefern, vorzugsweise in dem erfindungsgemäßen wäßrigen Polyurethansystem eingesetzt, insbesondere auf Leder Beschichtungen, die unter den üblichen technischen Bedingungen der Lederherstellung schnell genug trocknen. Diese Beschichtungen besitzen insbesondere gute Naßreibechtheiten sowie hohe Naß- und Trockenknickfestigkeiten.

Die so beschichteten Leder verhalten sich insbesondere beim Bügeln, Prägen oder Stapeln problemlos.

Die wäßrigen Polyurethansysteme werden auch 2-Komponenten-Polyurethan-Zurichtungen genannt.

Die wäßrigen Polyurethansysteme liefern nach dem Auftragen auf Substrate wie beispielsweise Metall, Holz, Papier, Textil, Kunststoff und insbesondere Leder und dem Trocknen einen geschlossenen Film bzw. homogene, fehlerfreie Beschichtungen, die entsprechend hohe Naßreibechtheiten besitzt.

Das erfindungsgemäße Polyurethansystem besitzt extrem gute Verlaufseigenschaften, was wiederum zu sehr klaren, nicht narbenbelastenden Zurichtungen führt. Dadurch werden sehr elegante, anilinartige Zurichtungen ermöglicht.

Das erfindungsgemäße Polyurethansystem ist ebenfalls vorteilhaft, wenn es zusätzlich konventionelle hochmolekulare Latices enthält.

Das erfindungsgemäße 2-K-Zurichtsystem liefert Zurichtungen mit klarer Oberfläche. Modebedingt können jedoch auch Substrate, insbesondere Leder mit matter Oberfläche gefragt sein. Um diese Anforderungen zu erfüllen, ist es vorteilhaft, Binder der Komponente A) mit einem Gehalt an gegebenenfalls organisch belegten Kieselsäuren einzusetzen. Die Kieselsäuren erzeugen eine matte Oberfläche der Zurichtung, sie wirken als Mattierungsmittel.

Die Erfindung betrifft daher weiterhin die Verwendung des wäßrigen Polyurethansystems zur Beschichtung von verschiedensten Substraten, vorzugsweise Holz, Papier, Textil, Kunststoff, Metall, insbesondere von Leder.

Ebenfalls Gegenstand der vorliegenden Erfindung sind die mit dem erfindungsgemäßen wäßrigen Polyurethansystem beschichteten Substrate.

Die Erfindung betrifft weiterhin ein Verfahren zum Beschichten von Substraten, insbesondere von Leder, das dadurch gekennzeichnet ist, daß man wäßrige Polyurethansysteme auf Substrate aufträgt.

## Beispiele

### Beispiel 1

In einem 11-Kolben mit Rührer und $N_2$ Überleitung werden 94,5 g eines linearen Hexandiolcaprolactoncarbonatdiols der mittleren Molmasse 2 000 g/mol, 283,5 g eines $C_4$-Polyetherdiols der Molmasse 2 000, sowie 25,4 g Dimethylolpropionsäure vorgelegt und 30 min bei 120°C entwässert.

Danach werden 140,6 g N-Methylpyrrolidon zugesetzt und auf 70°C gekühlt. Es werden 27,16 g 1,4-Butandiol zugefügt.

Bei 70°C werden unter Rühren 98,9 g Isophorondiisocyanat und 122,6 g 4,4'-Diisocyanatodicyclohexylmethan zugesetzt. Es wird bei 105 bis 110°C gerührt, bis der NCO-Gehalt auf 2,46 % gefallen ist. Es wird auf 80°C gekühlt und eine Mischung aus 17,7 g Triethylamin und 17,7 g N-Methylpyrrolidon eingerührt. Nach 15 min Nachrühren wird das Produkt unter starkem Rühren in 900 g Wasser von 40°C eingetragen. Es bildet sich eine Dispersion des Prepolymers.

Nach 5 min werden in diese Dispersion 28,5 g Diethanolamin, gelöst in 90 g Wasser unter Rühren eingetragen. Es wird 20 min stark nachgerührt, danach wird die Dispersion noch 9 Stunden bei mäßiger Rührleistung und 50°C ausgerührt.

Es resultiert eine feinteilige Dispersion mit folgenden Kenndaten:

| | |
|---|---|
| Feststoffgehalt (FK): | 37,8% |
| Teilchengröße (gemessen nach der Laserkorrelationsspektroskopie (LKS)): | 60 nm |
| OH-Funktionalität: | 4 |
| Zahlenmittel Molmasse: | 5145 g/mol |

### Beispiel 2

Das Beispiel 1 wird wiederholt, mit dem Unterschied, daß als Makrodiole eine Mischung aus 283,5 g des Caprolacton/Hexandiol-Polycarbonatdiols und 94,5 g des $C_4$-Polyetherdiols eingesetzt wird.

Es resultiert eine feinteilige Dispersion mit folgenden Kenndaten:

| | |
|---|---|
| FK: | 37,8 |
| Teilchengröße LKS: | 62,3 nm |
| OH-Funktionalität: | 4 |
| Zahlenmittel Molmasse: | 5145 g/mol |

### Beispiel 3

In einem 21-Reaktionskolben mit Heizung und Rührer werden 400 g des Hexandiol/Caprolacton-Polycarbonatdiols aus Beispiel 1 und 27 g Dimethylolpropionsäure vorgelegt und bei 110°C unter Rühren 30 min am Vakuum entwässert.

Bei 100°C werden schnell hintereinander 104,8 g Isophorondiisocyanat und 129,7 g 4.4'-Diisocyanato-dicyclohexylmethan zugegeben. Es wird bei 105°C gerührt. Nach 2 h ist ein NCO-Wert von 7,18 % erreicht.

Man kühlt auf 80°C, gibt 167,5 g N-Methylpyrrolidon zu und rührt 10 min. Zur nun homogenen Mischung werden 28,7 g Butandiol gegeben. Man rührt bei 80°. Nach weiteren 3 h ist der NCO-Gehalt auf 2,42 % abgefallen. Nun werden bei 75°C 19,5 g Triethylamin eingerührt. Man rührt 15 min nach.

Nun wird die 75°C warme Lösung in 1 120 g in einem 4 l-Sulfierbecher vorgelegtes und auf 45°C erwärmtes Wasser schnell eingetragen. Während des Eintragens wird stark gerührt. Es bildet sich eine Emulsion. In diese Emulsion wird unter weiterem starken Rühren eine Lösung von 27 g Diethanolamin in 100 g Wasser eingetragen. Nach Zugabe aller Komponenten hat sich eine Mischtemperatur von 55°C eingestellt. Es wird 9 Stunden bei reduzierter Rührleistung nachgerührt, wobei die Temperatur bei 50°C gehalten wird. Es entsteht eine Dispersion mit folgenden Kenndaten.

| | |
|---|---|
| FK: | 35 % |
| Teilchengröße LKS: | 52 nm |
| OH-Funktionalität: | 4 |
| Zahlenmittel Molmasse: | 5 730 g/mol |

## Beispiel 4

Der Ansatz von Beispiel 3 wird mit folgender Variation wiederholt:

Das Polycaprolacton/Hexandiol-polycarbonatdiol und die Dimethylolpropionsäure werden gemeinsam vorgelegt und entwässert. Danach wird das N-Methylpyrrolidon zugegeben und bis zur klaren Lösung gerührt. In die Lösung wird das Butandiol eingerührt. Bei 60°C werden unter Rühren Isophorondiisocyanat und 4.4'-Diisocyanatodicyclohexylmethan schnell zugegeben. Nach Zugabe wird bei 80°C gerührt. Nach 2,5 Stunden ist ein NCO-Gehalt von 2,42 % erreicht.

Nun wird genau wie in Beispiel 3 weiter verfahren. Es resultiert eine Dispersion mit folgenden Kenndaten

| | |
|---|---|
| FK: | 35 % |
| Teilchengröße LKS: | 45 nm |
| OH-Funktionalität: | 4 |
| Zahlenmittel Molmasse: | 5 730 g/mol |

## Beispiel 5

In einem 21-Kolben mit Rührer und Heizung werden 600 g Caprolacton/Hexandiolpolycarbonatdiol und 40,5 g Dimethylolpropionsäure vorgelegt und 1 h bei 110°C im Vakuum entwässert.

Danach werden 251 g N-Methylpyrrolidon und 43 g 1.4-Butandiol zugefügt und homogenisiert. Zur nun 60°C warmen klaren Lösung werden 7,3 g 2-Ethylhexanol gegeben.

Zur klaren Lösung werden schnell hintereinander unter Rühren 194,5 g 4.4'-Diisocyanato-dicyclohexylmethan und 157,2 g Isophorondiisocyanat gegeben. Es wird auf 90°C erhitzt und bei dieser Temperatur gerührt. Nach 3 h ist ein NCO-Wert von 2,24 % erreicht. Es wird auf 75°C gekühlt. Bei dieser Temperatur werden 29,3 g Triethylamin eingerührt und 10 min nachgerührt.

Die 75°C warme Lösung des neutralisierten Prepolymers wird in 1 350 g Wasser von 45°C, die in einem 41-Sulfierbecher mit wirksamem Rührer vorgelegt sind, innerhalb 5 min eingerührt. Danach wird sofort eine Lösung von 46,6 g Diethanolamin in 300 g Wasser zur entstandenen Emulsion des Prepolymers gegeben. Es wird noch 10 min stark gerührt und danach noch 10 Stunden bei einer Temperatur von 50°C mit mäßiger Rührleistung ausgerührt.

Die erhaltene Dispersion hat folgende Kenndaten:

| | |
|---|---|
| FK: | 36 % |
| Teilchengröße LKS: | 35 nm |
| OH-Funktionalität: | 3,55 |
| Zahlenmittel Molmasse: | 4 356 g/mol |

## Beispiel 6 Formulierung mit Kieselsäure

In einem 21-Becher mit Dissolverscheibe wurden 608 g Produkt aus Beispiel 5 vorgelegt. Der pH wurde mit Monoethanolamin auf 8,0 gestellt. Hierzu wurden 0,5 g benötigt. Das Produkt wurde mit 321 g entionisiertem Wasser verdünnt. Nun wurden bei minimaler Drehzahl 70 g einer thermischen Kieselsäure der mittleren Teilchengröße von 4 $\mu$m und der Ölzahl von 360 eingetragen. Nachdem das Material untergerührt und gut benetzt war, wurde die Drehzahl des Dissolvers hochgefahren und 20 min ohne Kühlung dispergiert. Nach Zugabe von 0,5 g Tributylphosphat wurde noch 20 min bei niedriger Drehzahl nachgerührt. Danach wurde über ein 50 $\mu$ Nylontuch filtriert.

Es resultierte eine stabile Formulierung mit 7 % Silikatgehalt und 21,8 % Binder-Trockensubstanz. Die Formulierung wurde beim Stehen dickflüssig- fast sturzfähig -; durch leichtes Rühren oder Schütteln nahm sie sofort wieder eine fließfähige Konsistenz an.

## Anwendungsbeispiele

Eingesetzte Materialien

Die Komponenten der Grundierungsrezeptur sind folgende:

1.1 Haftgrund: 20 %ige aromatische, anionische, weiche Polyether-Polyurethan-dispersion mit folgenden Eigenschaften: 100 % Modul: 0,4 MPas, Zugfestigkeit 5,7 MPas bei 1150 % Dehnung

1.2 Farbe: Formulierung, enthaltend 26 % Ruß, 0,2 % eines Schichtsilikats, sowie 8,6 % einer mit Ethanolamin neutralisierten Polyacrylsäure

1.3 Verlaufshilfsmittel, enthaltend 2,5 % eines Schichtsilikats, 1,5 % eines nicht funktionellen Silikons, sowie Klauenöl (1,5 %) und 3,3 % Casein. Die Formulierung ist mit Ammoniak alkalisch gestellt.

1.4 Antiklebemittelemulsion, enthaltend 5 % Wollfett, 20 % assoziativen Polyurethanverdicker, sowie 1 % hochsiedender Aromatenverschnitt

1.5 Acrylatdispersion, 35 %ig mit folgenden Eigenschaften: 100 % Modul: 0,3 MPas, Zugfestigkeit 4,0 MPas bei 880 % Dehnung

1.6 mittelharte 40 %ige aliphatisch-aromatische Polyester-Polyurethandispersion mit folgenden Eigenschaften: 100 % Modul: 4,7 MPas, Zugfestigkeit: 33 MPas bei 600 % Dehnung

## I. Substrat

Für alle Versuche auf Leder wurde ein nach folgender Rezeptur grundiertes Möbelleder verwendet.

Auf unzugerichtetes Rind-Möbelnappa wird eine Grundierung wie folgt aufgebracht:

Das Leder wird zuerst mit einer Formulierung aus 300 Tl. eines handelsüblichen Polyurethan-Haftgrunds (1.1); 100 Tl. Isopropanol und 600 Tl. Wasser (ein Kreuz spritzen) vorgrundiert.

Zur Grundierung wird eine Mischung aus 75 Tl. der Farbe (1.2); 75 Tl. eines trockenstellenden Verlaufshilfsmittels (1.3); 50 Tl. eines weich stellenden Antiklebemittels (1.4); 150 Tl. einer handelsüblichen weichen Acrylat-Dispersion (1.5); 150 Tl. einer mittelharten Polyurethan-Dispersion (1.6) und 475 Tl. Wasser hergestellt. Diese Mischung wird zweimal (je ein Kreuz) auf das vorgrundierte Leder gespritzt. Man trocknet 5 min bei 70°C. Das Leder wird hydraulisch gebügelt (80°C, 200 bar, 6 sec) und danach wird ein weiterer Spritzauftrag obiger Mischung (ein Kreuz) appliziert. Nach Trocknung wird erneut gebügelt (80°C, 50 bar, Kissplate). Das so grundierte Leder wird als Substrat zur Herstellung der Prüflinge eingesetzt.

## II Vernetzer der Komponente c)

IIc1  Als Vernetzer wurde IIc1 ein handelsübliches Polyether-modifiziertes 100 %iges HDI-Trimerisat mit einem NCO-Gehalt von 17,5 % und einer NCO-Funktionalität von 2,8; sowie

IIc2  die Lösemittelformulierung eines polyethermodifizierten HDI-Trimerisats mit einem NCO-Gehalt von 12,5 % und einer NCO-Funktionalität von 2,7 eingesetzt.

## III Konventionelle Latices

Es wurden verwendet:

IIIa  eine 30 %ige, mittelharte (65 Shore A) PUR-Dispersion eines anionischen PUR für Appreturen mit folgendem Filmdaten: 100 %-Modul: 4,2 MPas; Zugfestigkeit: 42,1 MPas bei 560 % Dehnung

IIIb  eine sehr harte (>90 Shore A) 40 %ige PUR-Dispersion eines anionischen PUR für Appreturen mit folgendem Filmdaten: 100 %-Modul: 17,5 MPas; Zugfestigkeit: 37,3 MPas bei 280 % Dehnung

Die physikalischen Lederechtheiten wurden gemäß DIN 53 351 (Knickechtheiten) bzw. DIN 53 399 (Reibechtheiten) ermittelt.

## Beispiel 7

Die Dispersion des Beispiels 1 wurde mit Wasser und Vernetzer IIc2 so eingestellt, daß eine Formulierung mit 12 % PUR Feststoffgehalt und 4,0 % Vernetzergehalt resultierte. Das entspricht einem Valverhältnis OH/NCO von 1:1,32. Diese Formulierung wurde in einer Menge von 5 g pro ¼ Quadratfuß auf das grundierte Leder gespritzt. Es wurde 5 min bei 80°C im Umlufttrockenschrank getrocknet, dann wurde auf der Durchlaufbügelmaschine bei 100°C Walzentemperatur, 50 bar Druck und 6 m pro Minute abgebügelt. Der Prüfkörper fiel leicht von der Walze ab.

Es resultierten folgende Echtheiten:

Naßreibungen: >1 000 ohne Beschädigung; Trocken- und Naßknickungen mit $10^6$ bzw. $2x10^5$ ohne Beanstandung.

### Beispiel 8

Aus der Dispersion des Beispiels 4 und Vernetzer IIc1 wird mit Wasser eine Formulierung hergestellt, die 12 %ig an Festkörper der Dispersion und 2,6 %ig an Vernetzer IIc1 ist. Das entspricht einem OH/NCO-Verhältnis von 1: 1,29. Diese Formulierung wird wie in Beispiel 7 auf das grundierte Leder aufgebracht; getrocknet und gebügelt.

Es resultierten folgende Echtheiten:

Naßreibungen: 960; Filz leicht angefärbt, Zurichtung nicht erkennbar beschädigt. Trocken- und Naßknickungen bei $10^6$ bzw. $2x10^5$ ohne Befund.

### Beispiel 9

Aus der konventionellen PUR-Dispersion IIIb und der Dispersion des Beispiels 4 wird eine Formulierung mit 12 % Gesamtfestkörper der Dispersionen und 1,5 % Vernetzer IIc2 hergestellt, wobei das Festkörperverhältnis IIIb/ Dispersion 4 85:15 beträgt. Das Valverhältnis OH/NCO; bezogen auf Dispersion aus Beispiel 4 beträgt 1:3,7. Die Formulierung wird wie in Beispielen 7-8 appliziert und getestet.
Naßreibungen: 450, Filz beginnende Färbung, Trocken- und Naßknickung mit $10^6$ bzw. $2x10^5$ in Ordnung.
Die zum Vergleich mit der gleichen Vernetzermenge festkörpergleich gespritzte reine IIIb-Dispersion lieferte nur 160 Naßreibungen.

### Beispiel 10

Eine Mischung aus 372 g Silikatformulierung aus Beispiel 6; 178 g Dispersion aus Beispiel 5 wird mit 45 g einer 9 %igen Lösung eines handelsüblichen Acrylatverdicker in der Viskosität leicht erhöht. Man rührt eine Voremulsion aus 40 g Vernetzer IIc2 und 40 g Wasser ein und homogenisiert noch mit 30 g Methoxypropylacetat. Die spritzfertige Mischung hat ein OH/NCO-Verhältnis von 1:1,3. Es wird 1 Kreuz auf das grundierte Leder gespritzt, danach wird 5 min bei 80°C zwischengetrocknet und ein weiteres Kreuz gespritzt. Man spritzt auf sichtbare Feuchte. Man trocknet erneut 5 min bei 80°C. Das resultierende Muster hatte einen samtartig schwarzen Aspekt.

Folgende Echtheiten wurden ermittelt:

Naßreibungen: 1 8000 bis zur ersten Filzverfäbung, Trockenknickungen: 75 000 ohne Beschädigung, $10^6$ mit ganz leichten Rissen. Das Leder zeigte keine Vergrauung in der Knickfalte.

### Beispiel 11

Es wird analog Beispiel 10 eine Mischung aus 372 g Silikatformulierung aus Beispiel 6 und 140 g der PUR-Dispersion IIIa hergestellt, die mit 45 g der 9 %igen Lösung des Acrylatverdickers versetzt wird. Danach werden 80 g der Vemetzeremulsion aus Beispiel 10 sowie 30 g Methoxypropylacetat eingerührt. Die Mischung wird wie in Beispiel 10 auf das grundierte Testleder appliziert. Das resultierende Muster hatte eine matte, aber nicht graue Oberfläche.

Folgende Echtheiten wurden erhalten:

Naßreibungen: 1 000 ohne sichtbare Beschädigung der Zurichtung oder Verfärbung des Filzes. Trockenknickungen: 75 000 ohne Beschädigung in der Knickfalte, bei $10^6$ Knickungen erste Feinrisse, kein Graubruch.

### Patentansprüche

**1.** Wässrige Polyurethandispersionen enthaltend ein Polyurethan, aufgebaut aus

a) wenigstens einem Polyol mit einem als Zahlenmittel bestimmten mittleren Molekulargewicht von 500 bis 6 000 g/mol,
b) wenigstens einem Polyol, vorzugsweise Diol, mit einem Molgewicht von kleiner 500 g/mol,
c) wenigstens einem aliphatischen Polyisocyanat,
d) wenigstens einem Diol mit einem Molekulargewicht von kleiner als 450 g/mol, das eine oder mehrere ionische Gruppen und/oder eine oder mehrere potentiell ionische Gruppen trägt,
e) wenigstens einem gegenüber NCO-Gruppen reaktiven Amin, das Hydroxygruppen trägt und eine OH-Funktionalität von 1 bis 6 besitzt,
f) Wasser und gegebenenfalls
g) einem Monoalkohol,

**dadurch gekennzeichnet, dass** das Molverhältnis von Polyol der Komponente

a) zur Summe der Polyole b) und d) 1:1,5 bis 1:4 beträgt, das Molverhältnis der Summe der Polyole a), b) und d) zum Polyisocyanat c) 1:1,1 bis 1:2,5, beträgt, wobei die OH-Funktionalität des Polyurethans 2 bis 6, beträgt, und das als Zahlenmittel bestimmte mittlere Molekulargewicht des Polyurethans weniger als 15 000 g/mol beträgt.

2. Wässrige Polyurethandispersionen gemäß Anspruch 1, **dadurch gekennzeichnet, dass** die mittlere Teilchengröße des Polyurethans kleiner als 100 nm ist.

3. Wässrige Polyurethandispersionen gemäß Anspruch 1, **dadurch gekennzeichnet, dass** der Gehalt der ionischen Gruppen, insbesondere der Carboxylatgruppen, des Polyurethans 5 bis 200 Millival, bezogen auf 100 g des Polyurethans, beträgt.

4. Wässrige Polyurethandispersionen gemäß Anspruch 1, **dadurch gekennzeichnet, dass** sie Kieselsäuren enthalten.

5. Verfahren zur Herstellung der Polyurethandispersion gemäß Anspruch 1, **dadurch gekennzeichnet, dass** man die Komponenten a), b), c), d) und gegebenenfalls g) zu einem NCO-Prepolymeren umsetzt und dieses mit den Komponenten e) und Wasser zu einem Polyurethan mit einer OH-Funktionalität von 2 bis 6 umsetzt.

6. Wässriges Polyurethansystem enthaltend

A) wenigstens eine wässrige Polyurethandispersion gemäß Anspruch 1 und
B) wenigstens ein wasserdispergierbares, aliphatisches oder cycloaliphatisches Polyisocyanat mit einer NCO-Funktionalität von wenigstens 2,

wobei das Verhältnis der OH-Gruppen der Komponente A) zu den NCO-Gruppen der Komponente B) 1:1 1 bis 1: 4, beträgt.

7. Verwendung des wässrigen Polyurethansystems gemäß Anspruch 6, zur Beschichtung von verschiedensten Substraten.

8. Verwendung des wässrigen Polyurethansystems gemäß Anspruch 6 zur Beschichtung von Holz, Textil, Papier, Kunststoff, Metall und Leder.

9. Mit dem wässrigen Polyurethansystem gemäß Anspruch 6 beschichtete Substrate.

10. Verfahren zum Beschichten von Substraten, **dadurch gekennzeichnet, dass** man wässrige Polyurethansysteme gemäß Anspruch 6 auf Substrate aufträgt.

11. Substrate, beschichtet mit wenigstens einem wässrigen Polyurethansystem gemäß Anspruch 6.

**Claims**

1. Aqueous polyurethane dispersions containing a polyurethane, composed of

a) at least one polyol having an average molecular weight, determined as the number average, of 500 to 6000 g/mol,

b) at least one polyol, preferably diol, having a molecular weight of less than 500 g/mol,

c) at least one aliphatic polyisocyanate,

d) at least one diol having a molecular weight of less than 450 g/mol, which carries one or more ionic groups and/or one or more potentially ionic groups,

e) at least one amine which is reactive towards NCO groups, carries hydroxyl groups and has an OH functionality of 1 to 6,

f) water and optionally

g) a monoalcohol,

**characterized in that** the molar ratio of polyol of the component a) to the sum of the polyols b) and d) is 1:1.5 to 1:4, the molar ratio of the sum of the polyols a), b) and d) to the polyisocyanate c) is 1:1.1 to 1:2.5, the OH functionality of the polyurethane being 2 to 6, and the average molecular weight, determined as the number average, of the polyurethane being less than 15,000 g/mol.

2. Aqueous polyurethane dispersions according to Claim 1, **characterized in that** the mean particle size of the polyurethane is less than 100 nm.

3. Aqueous polyurethane dispersions according to Claim 1, **characterized in that** the content of the ionic groups, in particular of the carboxylate groups, of the polyurethane is 5 to 200 milliequivalents, based on 100 g of the polyurethane.

4. Aqueous polyurethane dispersions according to Claim 1, **characterized in that** they contain silicic acids.

5. Process for the preparation of the polyurethane dispersion according to Claim 1, **characterized in that** the components a), b), c), d) and optionally g) are reacted to give an NCO prepolymer and this is reacted with the components e) and water to give a polyurethane having an OH functionality of 2 to 6.

6. Aqueous polyurethane system containing

A) at least one aqueous polyurethane dispersion according to Claim 1 and

B) at least one water-dispersible, aliphatic or cycloaliphatic polyisocyanate having an NCO functionality of at least 2,

the ratio of the OH groups of the component A) to the NCO groups of the component B) being 1:1 to 1:4.

7. Use of the aqueous polyurethane system according to Claim 6, for coating a very wide variety of substrates.

8. Use of the aqueous polyurethane system according to Claim 6 for coating wood, textile, paper, plastic, metal and leather.

9. Substrates coated with the aqueous polyurethane system according to Claim 6.

10. Process for coating substrates, **characterized in that** aqueous polyurethane systems according to Claim 6 are applied to substrates.

11. Substrates coated with at least one aqueous polyurethane system according to Claim 6.

**Revendications**

1. Dispersions aqueuses de polyuréthane contenant un polyuréthane formé à partir de

a) au moins un polyol présentant un poids moléculaire moyen déterminé en tant que moyenne numérique de 500 à 6 000 g/mole,

b) au moins un polyol, de préférence un diol, présentant un poids moléculaire inférieur à 500 g/mole,

c) au moins un polyisocyanate aliphatique,

d) au moins un diol présentant un poids moléculaire inférieur à 450 g/mole, qui porte un ou plusieurs groupes ioniques et/ou un ou plusieurs groupes potentiellement ioniques,

e) au moins une amine réactive par rapport à des groupes NCO, qui porte des groupes hydroxy et qui présente une fonctionnalité OH de 1 à 6,

f) de l'eau et le cas échéant

g) un monoalcool,

**caractérisées en ce que** le rapport molaire de polyol du composant a) à la somme des polyols b) et d) est de 1: 1,5 à 1:4, le rapport molaire de la somme des polyols a), b) et d) au polyisocyanate c) est de 1:1,1 à 1:2,5, la fonctionnalité OH du polyuréthane étant de 2 à 6, et le poids moléculaire moyen déterminé en tant que moyenne numérique du polyuréthane étant inférieur à 15 000 g/mole.

2. Dispersions aqueuses de polyuréthane selon la revendication 1, **caractérisées en ce que** la grosseur moyenne des particules du polyuréthane est inférieure à 100 nm.

3. Dispersions aqueuses de polyuréthane selon la revendication 1, **caractérisées en ce que** la teneur en groupes ioniques, en particulier en groupes carboxylate, du polyuréthane est de 5 à 200 milliéquivalents, par rapport à 100 g du polyuréthane.

4. Dispersions aqueuses de polyuréthane selon la revendication 1, **caractérisées en ce qu'**elles contiennent des silices.

5. Procédé de préparation de la dispersion de polyuréthane selon la revendication 1, **caractérisé en ce qu'**on transforme les composants a), b), c), d) et le cas échéant g) en un prépolymère à fonctionnalité NCO et on transforme celui-ci avec le composant e) et de l'eau en un polyuréthane avec une fonctionnalité OH de 2 à 6.

6. Système aqueux de polyuréthane, contenant

A) au moins une dispersion aqueuse de polyuréthane selon la revendication 1 et

B) au moins un polyisocyanate aliphatique ou cycloaliphatique, dispersible dans l'eau, présentant une fonctionnalité NCO d'au moins 2,

le rapport des groupes OH du composant A) aux groupes NCO des composants B) étant de 1:1 à 1:4.

7. Utilisation du système aqueux de polyuréthane selon la revendication 6, pour le revêtement de différents substrats.

8. Utilisation du système aqueux de polyuréthane selon la revendication 6 pour le revêtement du bois, du textile, du papier, d'un matériau synthétique, du métal et du cuir.

9. Substrats revêtus par le système aqueux de polyuréthane selon la revendication 6.

10. Procédé pour le revêtement de substrats, **caractérisé en ce qu'**on applique des systèmes aqueux de polyuréthane selon la revendication 6 sur des substrats.

11. Substrats, revêtus par au moins un système aqueux de polyuréthane selon la revendication 6.